# EUROPÄISCHE PATENTANMELDUNG

(11) **EP 4 646 978 A1**
(43) Veröffentlichungstag der Anmeldung: **12.11.2025**
(21) Anmeldenummer: 24175119.7
(22) Anmeldetag: 10.05.2024
(51) Int. Cl.: A47J 37/06

(54) **OFENVORRICHTUNG ZUR ZUBEREITUNG VON TEIGWAREN, VERFAHREN ZUR ANZEIGE EINES IDEALTEMPERATURBEREICHS EINER OFENVORRICHTUNG SOWIE VERWENDUNG EINER OFENVORRICHTUNG**

(71) Anmelder: Burnhard GmbH, 40589 Düsseldorf (DE)
(72) Erfinder: Ruhfus, Max, 44225 Dortmund (DE); Strohfeld, Niklas, 41352 Korschenbroich (DE); Roth, Max, 40476 Düsseldorf (DE)
(74) Vertreter: Dompatent Partnerschaft von Patent- und Rechtsanwälten mbB

(57) **Zusammenfassung**

Ofenvorrichtung zur Zubereitung von Teigwaren, umfassend eine Gehäusewandung, einen zumindest teilweise von der Gehäusewandung umschlossenen Innenraum, eine in dem Innenraum angeordnete Wärmequelle zur Erhitzung des Innenraums, einen in dem Innenraum angeordneten Ofenstein mit einer Oberseite zur Ablage der Teigwaren sowie einer gegenüberliegenden Unterseite und eine den Ofenstein mechanisch kontaktierende erste Sensoreinrichtung zur Temperaturerfassung des Ofensteins, wobei die erste Sensoreinrichtung in einem Zwischenraum zwischen der Gehäusewandung und einer Ausnehmung in der Unterseite des Ofensteins angeordnet ist.

## Beschreibung

Die vorliegende Erfindung betrifft eine Ofenvorrichtung zur Zubereitung von Teigwaren, insbesondere einen Ofen zur Zubereitung von Pizzen. Die Erfindung betrifft weiterhin ein Verfahren zur Anzeige eines Idealtemperaturbereichs einer Ofenvorrichtung bzw. eines Pizzaofens sowie die Verwendung einer Ofenvorrichtung.

Aus dem Stand der Technik sind bereits Ofenvorrichtungen zur Zubereitung von Teigwaren, insbesondere Pizzaöfen, bekannt geworden, welche einen Innenraum mit einer Wärmequelle bzw. einer Heizeinrichtung zur Aufheizung des Innenraums auf eine gewünschte Back- bzw. Gartemperatur für die Teigwaren, insbesondere Pizzen, aufweisen. Bei den vorbezeichneten Wärmequellen kann es sich insbesondere um elektrische oder gasbetriebene Heizvorrichtungen handeln. Aus dem Stand der Technik sind auch Ofenvorrichtungen bekannt geworden, welche im Innenraum einen Ofenstein zum Auflegen der zu backenden bzw. zuzubereitenden Teigwaren aufweisen. Nachteilig an den aus dem Stand der Technik bekannten Ofenvorrichtungen ist, dass die Temperatur der Ofenvorrichtung lediglich im Innenraum über Temperaturfühler, wie beispielsweise entsprechende Temperatursensoren, gemessen werden kann. Dabei ist es jedoch insbesondere aufgrund der Zubereitung der Teigwaren, welche aufliegend auf dem angeordneten Ofenstein zubereitet werden, von essentieller Bedeutung für eine erfolgreiche Zubereitung, die genaue Temperatur des Ofensteins zu kennen.

Ausgehend von den vorbezeichneten Nachteilen des vorbekannten Standes der Technik ist es die Aufgabe, eine verbesserte Ofenvorrichtung zur Zubereitung von Teigwaren sowie ein Verfahren zur Anzeige eines Idealtemperaturbereichs einer Ofenvorrichtung bereitzustellen, bei welchen die vorliegende Temperatur sowohl innerhalb des Innenraums der Ofenvorrichtung als auch die genaue Steintemperatur des Ofensteins messbar ist.

Gemäß einem ersten Aspekt wird die vorliegende Aufgabe gelöst durch eine Ofenvorrichtung zur Zubereitung von Teigwaren, wobei die Ofenvorrichtung eine Gehäusewandung, einen zumindest teilweise von der Gehäusewandung umschlossenen Innenraum, eine in dem Innenraum angeordnete Wärmequelle zur Erhitzung des Innenraums, einen in dem Innenraum angeordneten Ofenstein mit einer Oberseite zur Ablage der Teigwaren sowie einer gegenüberliegenden Unterseite und eine den Ofenstein mechanisch kontaktierende erste Sensoreinrichtung zur Temperaturerfassung des Ofensteins aufweist. Die erste Sensoreinrichtung ist dabei erfindungsgemäß in einem Zwischenraum zwischen der Gehäusewandung und einer Ausnehmung in der Unterseite des Ofensteins angeordnet.

Die erfindungsgemäße Ausführungsform, wobei die erste Sensoreinrichtung zur Temperaturerfassung des Ofensteins in einem Zwischenraum zwischen der Gehäusewandung und einer Ausnehmung an der Unterseite des Ofensteins angeordnet ist, weist den erfindungsgemäßen Vorteil auf, dass die Temperatur des Ofensteins innerhalb des Materials des Ofensteins gemessen werden kann, wobei die erfindungsgemäße erste Sensoreinrichtung aufgrund der Anordnung in einen Zwischenraum zwischen Gehäusewandung und Ausnehmung in der Unterseite des Ofensteins von der Wärmestrahlung, beispielsweise der Wärmequelle innerhalb des Innenraums, nicht beeinflusst wird. Weiterhin weist die erfindungsgemäße Anordnung den Vorteil auf, dass nicht lediglich die Oberflächentemperatur der Oberseite, welche der Wärmequelle zugewandt ist, gemessen wird, sondern eben die Kerntemperatur des Ofensteins erfindungsgemäß gemessen werden kann und damit eben die Durchwärmung und Durchwärmtemperatur des Ofensteins erfindungsgemäß gemessen werden kann. Erfindungsgemäß kann es bevorzugt vorgesehen werden, dass die erste Sensoreinrichtung über eine Federeinrichtung an dem Ofenstein federnd anliegt. Die federnde Ausführungsform weist den Vorteil auf, dass der Ofenstein aus dem Innenraum beispielsweise zur Reinigung oder zum Austausch entfernt werden kann und bei dem Aus- oder Einbau sichergestellt werden kann, dass die erste Sensoreinrichtung wieder in mechanischen Kontakt zu der Ausnehmung in der Unterseite des Ofensteins gelangt. Weiterhin ist durch die federnde Ausführung sichergestellt, dass die erste Sensoreinrichtung auch bei Einbau oder Ausbau oder insbesondere aufgrund einwirkender äußerer Lasten, beispielsweise während des Transports des Ofenraums, nicht durch Anstoßen an die Unterseite des Ofensteins beschädigt wird.

Es kann weiterhin vorgesehen werden, dass die dem Innenraum zugewandte Oberseite des Ofensteins und die erste Sensoreinrichtung orthogonal zu der Oberseite und in Richtung der Unterseite mit einem Abstand a im Bereich von 1 mm < a < 10 mm beabstandet sind. Der Abstand a wird durch die Dicke des Ofensteins ausgefüllt. Erfindungsgemäß kann es vorgesehen werden, dass die erste Sensoreinrichtung über eine Verschraubung mit der Gehäusewandung verbunden ist.

Der Ofenstein kann innerhalb der Gehäusewandung auf mindestens drei Auflagerbereichen zur Ausbildung des Zwischenraums angeordnet werden. Die Anordnung auf drei Auflagerbereichen weist den Vorteil auf, dass der Ofenstein eine statisch bestimmte Lagerung aufweist und durch die Ausbildung des Zwischenraums zu der Gehäusewandung lediglich ein geringer Wärmeabfluss von dem Ofenstein zur Gehäusewandung erfolgt.

Weiterhin kann es erfindungsgemäß vorgesehen werden, eine zweite Sensoreinrichtung an der Gehäusewand zur Temperaturerfassung des Innenraums anzuordnen, wobei es bevorzugt vorgesehen werden kann, die zweite Sensoreinrichtung durch eine Verschraubung mit der Gehäusewandung zu verbinden.

Erfindungsgemäß kann es vorgesehen werden, die Wärmequelle in einem Randbereich des Innenraums anzuordnen, um einen möglichst großen Garraum für die Zubereitung von Teigwaren bereitzustellen und um eine möglichst gleichmäßige Wärmeverteilung innerhalb des Innenraums zu gewährleisten. Die Wärmequelle kann dabei als eine stabförmige Brennervorrichtung mit einer Längsachse ausgestaltet werden, wobei die stabförmige Brennervorrichtung bevorzugt eine Biegung aufweisen kann.

Die erste Sensorvorrichtung kann in einem zentralen Bereich des Ofensteins angeordnet werden, um eine mittige Temperatur des Ofensteins über dessen Erstreckung messen zu können und damit eine Art Referenztemperatur des Ofensteins messen zu können, welche unbeeinflusst ist von möglichen Randeffekten.

Bevorzugt kann es vorgesehen werden, dass die Gehäusewandung einen Bodenbereich aufweist, wobei der Ofenstein in dem Bodenbereich der Gehäusewandung eingelassen ist.

Weiterhin kann es vorgesehen werden, dass unterhalb des Bodenbereichs die Gehäusewandung Belüftungsschlitze zur Zufuhr von Kaltluft in den Innenraum umfasst.

Der Bodenbereich kann eine Griffmulde zur Handhabung des Ofensteins aufweisen, insbesondere kann über die Griffmulde der Ofenstein innerhalb des Innenraums seitlich ergriffen werden, so dass dieser werkzeuglos aus dem Innenraum entfernbar bzw. wieder hinzufügbar ist.

Die Gehäusewandung kann eine Öffnung zur Einführung von Teigwaren in den Innenraum, bevorzugt eine benutzerzugewandte vordere Öffnung des Innenraums, aufweisen.

Die Gehäusewandung kann bevorzugt in einem Bereich der Öffnung einen Ablagebereich mit einer Ablagefläche aufweisen, wobei die Ablagefläche und die Oberseite des Ofensteins im Wesentlichen in einer Ebene ausgebildet bzw. angeordnet sind. Die vorbezeichnete Ausführungsform weist den Vorteil auf, dass eine in der Ofenvorrichtung zuzubereitende Teigware bzw. insbesondere eine Pizza über die vordere Ablagefläche vereinfacht auf den Ofenstein und in den Innenraum eingebracht werden kann. Insbesondere kann die Teigware auch auf dem Ablagebereich noch vor oder nach dem Garvorgang abgelegt werden, um beispielsweise nach dem eigentlichen Garvorgang die zubereitete Teigware warm zu halten, ohne dabei eine weitere Durchgarung der Teigware zu bewirken.

Weiterhin kann es vorgesehen werden, dass der Innenraum eine Diffusoreinrichtung zur Streuung eines von der Wärmequelle abgegebenen Wärmestroms aufweist.

Die Gehäusewandung kann eine Isolierschicht zur thermischen Isolierung des Innenraums gegenüber der Umgebung der Ofenvorrichtung aufweisen, insbesondere kann ein Dämmmaterial im Inneren der Gehäusewandung und/oder eine zusätzliche Schicht außen oder innen an der Gehäusewandung angeordnet werden.

Es kann vorgesehen werden, dass außerhalb der Gehäusewandung eine Anzeigeeinrichtung zur Anzeige zumindest der Temperatur des Ofensteins und bevorzugt des Innenraums vorgesehen wird. Die Anzeigeeinrichtung kann bevorzugt in der Nähe des Ablagebereichs bzw. auch im Bereich der vorderen, dem Benutzer zugewandten, Öffnung des Innenraums vorgesehen werden. Besonders bevorzugt ist es vorgesehen, dass die Anzeigevorrichtung durch einen doppelwandigen Raum räumlich von der Gehäusewandung abgegrenzt ist. Der Ofenstein kann aus einem feuerfesten Keramikmaterial gefertigt werden bzw. diese umfassen, beispielsweise aus einem Cordierit-Material, insbesondere auch einem Cordierit-Schaumstoff, gefertigt werden, bei welchem es sich um eine feuerfeste Keramik mit geringer Wärmeleitung und geringer Wärmeausdehnung handelt.

Die Gehäusewandung kann in einem Bereich der Öffnung eine entfernbare Verschlusseinrichtung zum teilweisen oder vollständigen Verschließen der Ofenvorrichtung bzw. des Innenraums der Ofenvorrichtung aufweisen. Die Verschlusseinrichtung kann über einen Verschließmechanismus in eine Aussparung der Auflagefläche arretierbar und anordenbar ausgestaltet werden und besonders bevorzugt eine Griffvorrichtung aufweisen, welche thermisch isoliert ist.

Innerhalb der Gehäusewandung kann ein Flammenwächter zur Überwachung der Funktion der Wärmequelle angeordnet werden.

Gemäß einem zweiten Aspekt betrifft die vorliegende Erfindung ein Verfahren zur Anzeige eines Idealtemperaturbereichs einer Ofenvorrichtung mit einem Innenraum und einem Ofenstein über eine Anzeigevorrichtung umfassend die Schritte:
- Erfassen einer Temperatur des Ofensteins;
- Anzeige des ersten Idealtemperaturbereiches für die Ofenvorrichtung aufgrund der folgenden Bedingungen:
- Ausgeben eines ersten Lichtsignals, wenn die Temperatur des Ofensteins unterhalb eines ersten Minimaltemperaturwertes liegt;
- Ausgeben eines zweiten Lichtsignals, wenn die Temperatur des Ofensteins oberhalb eines ersten Maximaltemperaturwertes liegt;
- Ausgeben eines dritten Lichtsignals, wenn die Temperatur des Ofensteins im Bereich zwischen dem ersten Minimaltemperaturwert und dem ersten Maximaltemperaturwert liegt, wobei der erste Minimaltemperaturwert niedriger als der erste Maximaltemperaturwert gewählt ist.

Bevorzugt kann das erfindungsgemäße Verfahren weiterhin die Schritte umfassen:
- Auswählen der Anzeige des ersten Idealtemperaturbereiches oder eines zweiten Idealtemperaturbereiches über eine Benutzereingabe;
- Anzeige des ersten oder des zweiten Temperaturbereiches in Abhängigkeit der Auswahl der Benutzereingabe;
- wobei bei Auswahl des zweiten Idealtemperaturbereiches die Anzeige des zweiten Idealtemperaturbereiches für die Ofenvorrichtung aufgrund der folgenden Bedingungen erfolgt:
- Ausgeben eines ersten Lichtsignals, wenn die Temperatur des Ofensteins unterhalb eines zweiten Minimaltemperaturwertes liegt;
- Ausgeben eines zweiten Lichtsignals, wenn die Temperatur des Ofensteins oberhalb eines zweiten Maximaltemperaturwertes liegt;
- Ausgeben eines dritten Lichtsignals, wenn die Temperatur des Ofensteins im Bereich zwischen dem zweiten Minimaltemperaturwert und dem zweiten Maximaltemperaturwert liegt, wobei der zweite Minimaltemperaturwert niedriger als der zweite Maximaltemperaturwert gewählt ist und wobei bevorzugt der erste Minimaltemperaturwert niedriger als der zweite Minimaltemperaturwert und der erste Maximaltemperaturwert niedriger als der zweite Maximaltemperaturwert gewählt ist.

Weiterhin kann ein Anzeigen der Temperatur des Ofensteins und/oder der Temperatur des Innenraums erfolgen.

Gemäß einem dritten Aspekt betrifft die vorliegende Erfindung die Verwendung einer Ofenvorrichtung gemäß dem ersten Aspekt der Erfindung zur Durchführung des Verfahrens gemäß dem zweiten Aspekt der vorliegenden Erfindung.

Es zeigen:
- Figuren 1A bis: 1C schematische Ansichten einer ersten beispielhaften Ausführungsform einer erfindungsgemäßen Ofenvorrichtung;
- Figur 2: eine zweite beispielhafte Ausführungsform einer erfindungsgemäßen Ofenvorrichtung in perspektivischer Ansicht; sowie
- Figuren 3A und: 3B Schnittansichten einer erfindungsgemäßen Ofenvorrichtung gemäß den Figuren 1.

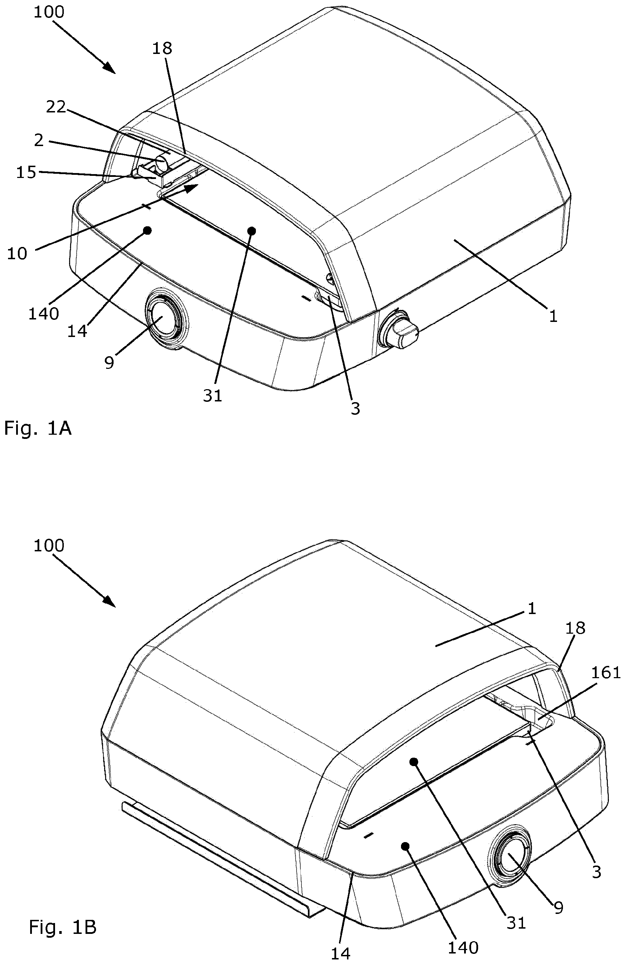

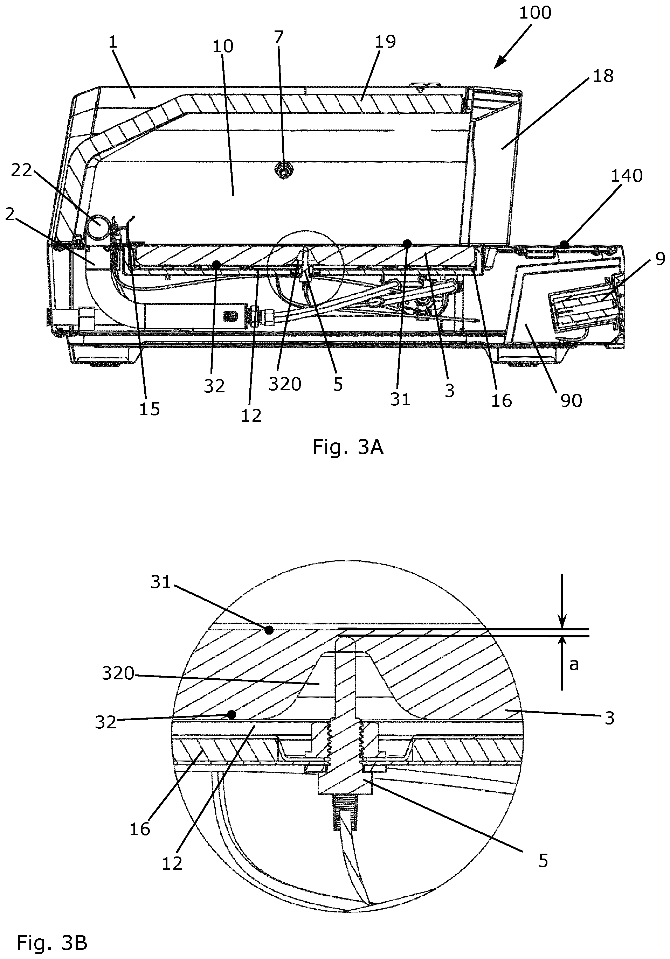

Die Figuren 1A bis 1C zeigen eine erfindungsgemäße Ofenvorrichtung 100 zur Zubereitung von Teigwaren, wie insbesondere Pizzen. Die erfindungsgemäße Ofenvorrichtung 100 weist zunächst eine Gehäusewandung 1 auf, welche in der dargestellten Ausführungsform sowohl ein haubenförmiges Oberteil als auch ein daran anschließendes Unterteil umfasst. Weiterhin umfasst die Ofenvorrichtung 100 einen zumindest teilweise von der Gehäusewandung 1 umschlossenen Innenraum 10, eine in dem Innenraum 10 angeordnete Wärmequelle 2 zur Erhitzung des Innenraums 10, einen in dem Innenraum 10 angeordneten Ofenstein 3 mit einer Oberseite 31 zur Ablage der Teigwaren sowie einer demgegenüber liegenden Unterseite 32 und eine den Ofenstein 3 mechanisch kontaktierende erste Sensoreinrichtung 5 zur Temperaturerfassung des Ofensteins 3, wobei die erste Sensoreinrichtung 5 in einem Zwischenraum 12 zwischen der Gehäusewandung 1 und einer Ausnehmung 320 in der Unterseite 32 des Ofensteins 3 angeordnet ist, so wie dies insbesondere den Figuren 3A und 3B entnehmbar ist.

Die Figuren 3A und 3B zeigen Schnittansichten der beispielhaften Ofenvorrichtung 100 gemäß den Figuren 1A bis 1C. Die erste Sensoreinrichtung 5 kann erfindungsgemäß über eine Federeinrichtung an dem Ofenstein 3 federnd anliegend bzw. mechanisch kontaktierend ausgebildet werden. Wie dies der Figur 3B entnehmbar ist, kann die dem Innenraum 10 zugewandte Oberseite 31 des Ofensteins 3 und die erste Sensoreinrichtung 5 orthogonal zu der Oberseite 31 und in Richtung der Unterseite 32 mit einem Abstand a beabstandet angeordnet werden.

Es kann weiterhin eine zweite Sensoreinrichtung 7 in der Gehäusewandung 1 zur Temperaturerfassung des Innenraums 10 insbesondere in einem Bereich oberhalb des Ofensteins 3 ausgebildet werden.

Die Wärmequelle 2 kann in einem Wandbereich des Innenraums 10 angeordnet werden, insbesondere kann die Wärmequelle 2 als Brennervorrichtung 22 mit einer Längsachse ausgestaltet werden, wobei die stabförmige Brennervorrichtung 22 bevorzugt mindestens eine Biegung umfasst.

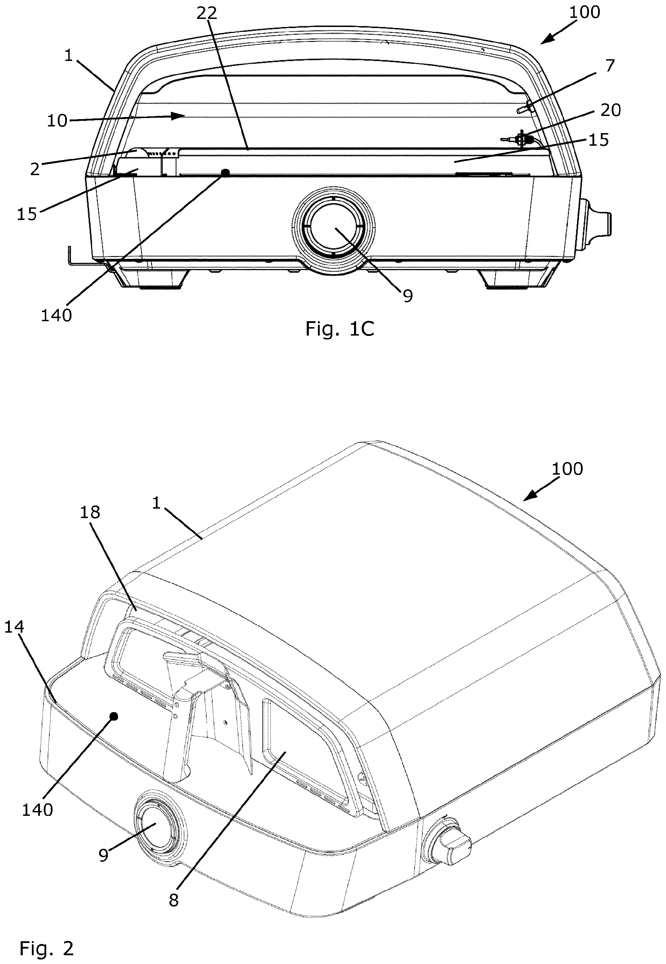

Die in der Figur 1A, 1C und 3A dargestellte Brennervorrichtung 22 ist dabei L-förmig erstreckt und verläuft im linken Randbereich und entlang der Rückseite des Innenraums 10 der Ofenvorrichtung 100.

Die erste Sensoreinrichtung 5 kann, wie in der Figur 3A dargestellt, in einem zentralen Bereich des Ofensteins 3 und damit bevorzugt gleichmäßig beabstandet zu den Rändern des Ofensteins 3 angeordnet werden. Der Ofenstein 3 kann so, wie insbesondere über die Figur 3A entnehmbar, in einem Bodenbereich 16 der Gehäusewandung eingelassen werden, wobei in dem Bodenbereich 16 eine Griffmulde 161 ausgebildet werden kann, so wie dies insbesondere der Figur 1B entnehmbar ist. Über die vorbezeichnete Griffmulde 161 ist es möglich, den Ofenstein 3 aus dem Innenraum 10 der erfindungsgemäßen Ofenvorrichtung 100 zu entfernen, um beispielsweise den Ofenstein 3 zu reinigen oder durch einen neuen Ofenstein 3 zu ersetzen.

Die Gehäusewandung 1 weist eine Öffnung 18 zur Einführung von Teigwaren in den Innenraum 10 auf, insbesondere zur Ablage der Teigwaren auf der Oberfläche 31 des Ofensteins 3 zur dortigen Garung. In dem Innenraum 10 kann eine Diffusoreinrichtung 15 zur Streuung eines von der Wärmequelle 2 abgegebenen Wärmestroms beziehungsweise der von der Wärmequelle 2 ausgesendeten thermischen Strahlung vorgesehen werden.

Weiterhin kann es vorgesehen werden, dass die Gehäusewandung 1 eine Isolierschicht 19 zur thermischen Isolierung des Innenraums 10 gegenüber der Umgebung aufweist.

Außerhalb der Gehäusewandung 1 kann eine Anzeigeeinrichtung 9 zur Anzeige zumindest der Temperatur des Ofensteins 3 und bevorzugt zur Anzeige der Temperatur innerhalb des Innenraums 10 angeordnet werden. Die Anzeigeeinrichtung 9 kann dabei, wie in der Figur 3A gezeigt, räumlich von der Gehäusewandung 1 durch einen doppelwandigen Raum 90 abgegrenzt werden.

So wie in der Figur 2 dargestellt, kann es vorgesehen werden, dass die Gehäusewandung 1 in einem Bereich der Öffnung 18 eine entfernbare Verschlusseinrichtung 8, wie beispielsweise eine vordere Boostertür, zum teilweisen oder vollständigen Verschließen der Öffnung 18 der Ofenvorrichtung 100 aufweist. So wie dies in der Figur 2 dargestellt ist, wird bevorzugt zwischen der Verschlusseinrichtung 8 und der Gehäusewandung 1 ein Spalt ausgebildet zum Austritt der heißen Luft aus dem Innenraum 10 der erfindungsgemäßen Ofenvorrichtung 100.

Weiterhin kann es vorgesehen werden, dass innerhalb der Gehäusewandung 1 ein sogenannter Flammenwächter 20 zur Überwachung der Wärmequelle 2 angeordnet ist, welcher insbesondere bei Verlöschen einer Flamme der gasbetriebenen Wärmequelle 2 die weitere Gaszufuhr zu der Wärmequelle 2 unterbindet.

## Patentansprüche

1. Ofenvorrichtung (100) zur Zubereitung von Teigwaren, umfassend:
- eine Gehäusewandung (1),
- einen zumindest teilweise von der Gehäusewandung (1) umschlossenen Innenraum (10),
- eine in dem Innenraum (10) angeordnete Wärmequelle (2) zur Erhitzung des Innenraums (10),
- einen in dem Innenraum (10) angeordneten Ofenstein (3) mit einer Oberseite (31) zur Ablage der Teigwaren sowie einer gegenüberliegenden Unterseite (32) und
- eine den Ofenstein (3) mechanisch kontaktierende erste Sensoreinrichtung (5) zur Temperaturerfassung des Ofensteins (3);
wobei die erste Sensoreinrichtung (5) in einem Zwischenraum (12) zwischen der Gehäusewandung (1) und einer Ausnehmung (320) in der Unterseite (32) des Ofensteins (3) angeordnet ist.

2. Ofenvorrichtung (100) nach Anspruch 1, wobei die erste Sensoreinrichtung (5) über eine Federeinrichtung an dem Ofenstein (3) federnd anliegt.

3. Ofenvorrichtung (100) nach einem der vorigen Ansprüche, wobei die dem Innenraum (10) zugewandte Oberseite (31) des Ofensteins (3) und die erste Sensoreinrichtung (5) orthogonal zu der Oberseite (31) und in Richtung der Unterseite (32) mit einem Abstand a im Bereich von 1 mm < a < 10 mm beabstandet sind.

4. Ofenvorrichtung (100) nach einem der vorigen Ansprüche, wobei eine zweite Sensoreinrichtung (7) an der Gehäusewandung (1) zur Temperaturerfassung des Innenraums (10) angeordnet ist.

5. Ofenvorrichtung (100) nach einem der vorigen Ansprüche, wobei die Wärmequelle (2) in einem Randbereich des Innenraums (10) angeordnet ist.

6. Ofenvorrichtung (100) nach einem der vorigen Ansprüche, wobei die erste Sensoreinrichtung (5) in einem zentralen Bereich des Ofensteins (3) angeordnet ist.

7. Ofenvorrichtung (100) nach einem der vorigen Ansprüche, wobei die Gehäusewandung einen Bodenbereich (16) aufweist, wobei der Ofenstein (3) in den Bodenbereich (16) der Gehäusewandung (1) eingelassen ist.

8. Ofenvorrichtung (100) nach einem der vorigen Ansprüche, wobei die Gehäusewandung (1) eine Öffnung (18) zur Einführung von Teigwaren in den Innenraum (10) aufweist.

9. Ofenvorrichtung (100) nach einem der vorigen Ansprüche, wobei die Gehäusewandung (1) in einem Bereich der Öffnung (18) einen Ablagebereich (14) mit einer Ablagefläche (140) aufweist, wobei die Ablagefläche (140) und die Oberseite (31) des Ofensteins (3) im Wesentlichen in einer Ebene angeordnet sind.

10. Ofenvorrichtung (100) nach einem der vorigen Ansprüche, wobei die Gehäusewandung (1) eine Isolierschicht (19) zur thermischen Isolierung des Innenraums (10) gegenüber der Umgebung aufweist.

11. Ofenvorrichtung (100) nach einem der vorigen Ansprüche, wobei außerhalb der Gehäusewandung (1) eine Anzeigeeinrichtung (9) zur Anzeige zumindest der Temperatur des Ofensteins (3) und bevorzugt des Innenraums (10) angeordnet ist, wobei die Anzeigeeinrichtung (9) bevorzugt durch einen doppelwandigen Raum (90) räumlich von der Gehäusewandung (1) abgegrenzt ist.

12. Ofenvorrichtung (100) nach einem der vorigen Ansprüche, wobei die Gehäusewandung (1) in einem Bereich der Öffnung (18) eine entfernbare Verschlusseinrichtung (8) zum teilweisen oder vollständigen Verschließen der Ofenvorrichtung (100) aufweist.

13. Verfahren zur Anzeige eines Idealtemperaturbereichs einer Ofenvorrichtung (100) mit einem Innenraum (10) und einem Ofenstein (3) über eine Anzeigeeinrichtung (9) umfassend die Schritte:
- Erfassen einer Temperatur des Ofensteins (3);
- Anzeige des ersten Idealtemperaturbereiches für die Ofenvorrichtung (100) aufgrund der folgenden Bedingungen:
- Ausgeben eines ersten Lichtsignals, wenn die Temperatur des Ofensteins (3) unterhalb eines ersten Minimaltemperaturwertes liegt;
- Ausgeben eines zweiten Lichtsignals, wenn die Temperatur des Ofensteins (3) oberhalb eines ersten Maximaltemperaturwertes liegt;
- Ausgeben eines dritten Lichtsignals, wenn die Temperatur des Ofensteins (3) im Bereich zwischen dem ersten Minimaltemperaturwert und dem ersten Maximaltemperaturwert liegt, wobei der erste Minimaltemperaturwert niedriger als der erste Maximaltemperaturwert gewählt ist.

14. Verfahren nach Anspruch 13, weiter umfassend die Schritte:
- Auswählen der Anzeige des ersten Idealtemperaturbereiches oder eines zweiten Idealtemperaturbereiches über eine Benutzereingabe;
- Anzeige des ersten oder des zweiten Temperaturbereiches in Abhängigkeit der Auswahl der Benutzereingabe;
- wobei bei Auswahl des zweiten Idealtemperaturbereiches die Anzeige des zweiten Idealtemperaturbereiches für die Ofenvorrichtung (100) aufgrund der folgenden Bedingungen erfolgt:
- Ausgeben eines ersten Lichtsignals, wenn die Temperatur des Ofensteins (3) unterhalb eines zweiten Minimaltemperaturwertes liegt;
- Ausgeben eines zweiten Lichtsignals, wenn die Temperatur des Ofensteins (3) oberhalb eines zweiten Maximaltemperaturwertes liegt;
- Ausgeben eines dritten Lichtsignals, wenn die Temperatur des Ofensteins (3) im Bereich zwischen dem zweiten Minimaltemperaturwert und dem zweiten Maximaltemperaturwert liegt, wobei der zweite Minimaltemperaturwert niedriger als der zweite Maximaltemperaturwert gewählt ist und wobei bevorzugt der erste Minimaltemperaturwert niedriger als der zweite Minimaltemperaturwert und der erste Maximaltemperaturwert niedriger als der zweite Maximaltemperaturwert gewählt ist.

15. Verfahren nach Anspruch 13 oder 14, weiter umfassend den Schritt:
- Anzeigen der Temperatur des Ofensteins (3) und/oder der Temperatur des Innenraums (10).

16. Verwendung einer Ofenvorrichtung (100) bevorzugt gemäß der Ansprüche 1 bis 12 zur Durchführung des Verfahrens gemäß der Ansprüche 13-15.
